Europäisches Patentamt

**European Patent Office**

**Office européen des brevets**

(11) Publication number: **0 023 031**
A1

(12)

# EUROPEAN PATENT APPLICATION

(21) Application number: **80104170.8**

(22) Date of filing: **17.07.80**

(51) Int. Cl.³: **G 01 M 3/22**

(30) Priority: **23.07.79 IT 2455279**

(43) Date of publication of application:
**28.01.81 Bulletin 81/4**

(84) Designated Contracting States:
**AT BE CH FR GB LI LU NL SE**

(71) Applicant: VARIAN S.p.A.
Via Varian
I-10040 Leini (Torino)(IT)

(72) Inventor: Sergio, Negri
Via Val della Torre, 30
I-10044 Pianezza (Torino)(IT)

(74) Representative: Vatti, Paolo, Dr. Ing. et al,
Fumero - Studio Consulenza Brevetti
Widenmayerstrasse 5/IV
D-8000 München 22(DE)

(54) **Method for locating a leak in a buried tube.**

(57) A method for locating a leak in a tube buried under the surface of the ground, as a sheath of an electric cable, wherein a pressurized gas is introduced into the tube, said gas consisting at least in part of a tracer gas, whose presence in the ambient air is detectable by a leak detector responsive to said tracer gas provides that helium is used as tracer gas and that the surface of the ground is scanned with the helium responsive leak detector.

EP 0 023 031 A1

# METHOD FOR LOCATING A LEAK IN A BURIED TUBE

=o⭑o꞊o⭑o꞊o⭑o꞊o⭑o=

The present invention relates to a method for locating a leak in a tube buried under the surface of the ground, as the sheath of an electric cable.

It is known to pressurize telephone cables with dry nitrogen and dry air to prevent water or water vapor from entering the cable through any small hole or other leak which may occur in the sheath of the cable. It is further known to locate such leaks in a cable by sensing the pressure drop from the location, at which the pressurized fluid is introduced, along the cable also towards the leak. As an alternative to the use of nitrogen and/or air it has been proposed to make use of gaseous halogenated hydrocarbons (well known under the trademark "Freon") for pressurizing electric cables to improve the insulation. Such halogenated hydrocarbon gases have proved to be also useful as tracer gas for modern leak detector equipment and as a consequence have permitted to improve the leaks detecting techniques.

However, none of the known methods has proved suitable for a reliable, quick and accurate leak detection in a buried cable. If the pressure drop along the cable is to be sensed, pressure sensors must be applied to spaced locations of the cable. The use of halogenated hydrocarbons has the disadvantage that these gases are toxic and inflammable, they slowly diffuse through the ground and are easily absorbed by the ground. It is therefore necessary to drill test holes in the ground along the course of the cable to be able to bring the leak detector sufficiently close to the cable for enabling leak de-

- 2 -                                    0023031

tection.

Thus, it is an object of the present invention to provide a method for locating a leak in a buried tube, as a sheath of an electric cable, avoiding the above mentioned drawbacks and allowing a quick, accurate and reliable location of any leak which could compromise the good working of the cable.

According to the invention a method for locating a leak in a tube buried under the surface of the ground, as an electric cable, specifically telephone cable, wherein a pressurized gas is introduced into the tube, said gas consisting at least in part of a tracer gas whose presence in the ambient air is detectable by a leak detector responsive to said tracer gas, is characterized in that helium is used as tracer gas and that the surface of the ground is scanned with a helium responsive leak detector.

Thus, in performing the method according to the invention, it is not necessary to drill holes into the ground and introduce a probe of the leak detector into such holes. Instead, the surface of the ground above the cable or other tube comprising a pressurized gas including helium is simply scanned by a helium responsive leak detector, e.g. of mass-spectrometer type. The scanning can be easily done by mounting the leak detector on a vehicle, as an automobil or truck such that the probe of the leak detector scans the surface of the ground, while the vehicle runs along the course of the cable.

Helium is no obvious choice as a gas for pressurizing a cable or the like since it is much more expensive than dry air or dry nitrogen and its insulating properties are the same or even worse than those of these readily available gases. Further, the high diffusivity of helium is a drawback for the use to pressurize a cable or other tube, since helium diffuses and is lost even through very minute holes to which water or water vapor cannot enter the cable.

Preferably the pressurizing gas comprising helium is not used as normal pressurizing gas but it is only when leaks occur for leak detection purposes. The mere presence of a leak may be detected e.g.

by loss of pressure or abnormal high consumption of the normal pressurizing gas. If a leak is indicated or suspected, helium or a helium containing gas is introduced in the cable. This can be easily done e.g. just by connecting a pressurized helium bottle or gas containing a certain percentage of helium having a pressure reduction valve set to about 0.7 bar to a valve of the cable nearest to the suspected location of the leak. If the leak rate is small (less than 10 litres pressuring gas per hour) it is preferred to allow an extended period of time, e.g. twelve hours before probing the presence of helium with the leak detector. For larger leak rates five hours or less of pressurisation may be enough to get a significant He signal.

Preferably helium is introduced in the cable through both the two valves placed at the ends of the suspected location of the leak.

The leak detector preferably comprises a fan or pump to suck a sample of air at a close distance from the surface of the ground to the probe portion of the leak detector.

It has been found that the spread of helium in the course of its travel from the buried cable to the surface of the ground is relatively small so that the leak can be very accurately located. The method has been successfully employed for locating the leak in cables buried up to 70 or more cm under the surface of the earth. Such a method is particularly effective also because it has been ascertained that helium penetrates even the asphalt layer of a road, a concrete or other pavement in an amount sufficient for successful leak location.

Preferably the probe of the leak detector is dragged along the ground's surface to assure maximum sensitivity and minimum interference with wind and other environmental influences.

As a consequence of what it has been heretofore specified and as it has been tested, the time required to locate a leak is drastically reduced in comparison with the known leak location method, e. g. by a factor of five or more. The method is obviously also applicable to detect a leak in other buried tubes different from the ones containing electric or telephone cables, as for example tubes used for carrying fluids as gas and the like.

Various changes and modifications of the above described preferred embodiment can be produced by those skilled in the art to suit the various applications or improve the one heretofore specified without however departing from the scope of the invention.

0023031

CLAIMS

1. Method for locating a leak in a tube buried under the surface of the ground, as a sheath of an electric cable wherein a pressurized gas is introduced into the tube, said gas consisting at least in part of a tracer gas, whose presence in the ambient air is detectable by a leak detector responsive to said tracer gas, characterized in that helium is used as tracer gas and that the surface of the ground is scanned with the helium responsive leak detector.

2. Method as in claim 1, wherein said leak detector has a helium responsive portion and in which the probe portion is dragged over the surface of the ground along a path essentially above and along the buried tube.

3. Method as in claims 1 or 2, for locating a leak in a pressurized cable which is provided with valves at spaced locations, said valves allowing to introduce a fluid into a cable, characterized in that a source of pressurized helium is connected to one or more valves straddling the portion of the cable in which a leak is suspected.

4. Method as in claim 3 wherein the pressurized helium source comprises pressurized helium bottles.

5. Method as in any of the preceding claims wherein said leak detector is a mass spectrometer type leak detector.

6. Method as in any of the preceding claims wherein the helium is introduced with a pressure of at least 0.5 bar, preferably about 0.7 bar above the atmospheric pressure.

## European Patent Office

## EUROPEAN SEARCH REPORT

Application number

EP 80 10 4170

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | DE - A - 2 005 150 (H. KOLLEWE) <br> * Pages 3 and 4 * <br> -- | 1,2,5 | G 01 M 3/22 |
| X | IEEE TRANSACTIONS ON POWER APPA- RATUS AND SYSTEMS, vol. 83, no. 8, August 1964 <br> New York US <br> T.A. BALASKA et al.: "Gases for Tracers and Ionization Control" pages 774-783 <br> * Page 778, right-hand column, part 1(a); page 779, right- hand column, figure 9 * <br> -- | 1,2,5 | |
| | ELEKTRONIK, vol. 50, no. 22, November 1968 <br> Berlin DE <br> H. FUSEN et al.: "Aufsuchen und Beheben von Fehlerstellen in Höchstspannungskabeln", pages 343-348 <br> * Page 346, left-hand column, last section and right-hand column, first section; figures 5 and 7 * <br> ---- | 1 | |

### TECHNICAL FIELDS SEARCHED (Int. Cl.³)

G 01 M 3/00
3/02
3/04
3/20
3/22
F 17 D 5/00
5/02
5/06
H 01 B 7/32

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 30-10-1980 | VAN ASSCHE |

EPO Form 1503.1 06.78